# EUROPÄISCHE PATENTSCHRIFT

(11) **EP 2 425 225 B1**
(45) Veröffentlichungstag und Bekanntmachung des Hinweises auf die Patenterteilung: **08.05.2013**
(21) Anmeldenummer: 10722568.2
(22) Anmeldetag: 27.04.2010
(51) Int. Cl.: G01M 17/10

(54) **PRÜFVERFAHREN FÜR DREHGESTELLE SOWIE PRÜF- UND MONTAGESTAND**
TEST METHOD FOR BOGIES AS WELL AS TEST STAND AND ASSEMBLY STAND
PROCÉDÉ DE CONTRÔLE DE BOGIES ET BANC D'ESSAI/DE MONTAGE

(30) Priorität: 27.04.2009 DE 102009002678
(43) Veröffentlichungstag der Anmeldung: 07.03.2012
(73) Patentinhaber: AGG Anlagen- und Gerätebau GmbH, 14467 Potsdam (DE); Stumvoll, Wolfgang, 09244 Lichtenau / OT Ottendorf (DE)
(72) Erfinder: STUMVOLL, Wolfgang, 09244 Lichtenau / OT Ottendorf (DE); BASTIAN, Rainer, 14822 Borkheide (DE)
(74) Vertreter: Brandt, Detlef
(86) Internationale Anmeldenummer: PCT/DE2010/050024
(87) Internationale Veröffentlichungsnummer: WO 2010/124686

(56) Entgegenhaltungen:
- EP-A2- 1 918 689
- DE-A1- 2 601 259
- GB-A- 2 266 123

## Beschreibung

Die Erfindung betrifft eine Lösung zur Prüfung von Drehgestellen von Schienenfahrzeugen. Sie bezieht sich auf ein entsprechendes Prüfverfahren und auf einen zur Durchführung des Verfahrens geeigneten Prüfstand, der außerdem als Montagestand zum Ausbau und Einbau von Baugruppen entsprechender Drehgestelle geeignet ist.

Sowohl im Zusammenhang mit der Konstruktion von Drehgestellen und der Konstruktion von Schienenfahrzeugen beziehungsweise Wagen oder Waggons, bei denen entsprechende Drehgestelle eingesetzt werden, als auch für deren Wartung und Kontrolle ist es erforderlich, Radaufstandskräfte, Drehgestellhöhen und andere Größen von Drehgestellen unter Belastung zu bestimmen. Hierzu werden spezielle Drehgestellprüfstände verwendet. Mittels solcher Prüfstände werden die auf ein jeweiliges Drehgestell durch einen mit ihm ausgerüsteten Wagenkasten und aufgrund unterschiedlicher betriebsbedingter Belastungszustände einwirkenden Kräfte simuliert. Zu diesem Zweck werden an den genannten Drehgestellprüfständen entsprechende Kräfte in das unverbaute Drehgestellt eingeleitet und die daraus resultierenden Größen, wie insbesondere die Radaufstandskräfte, welche die Räder auf die Schiene ausüben, mit Hilfe von speziellen Messwertaufnehmern und mindestens einer die Daten der Messwertaufnehmer verarbeitenden Auswerteeinheit bestimmt.

Bei bekannten Drehgestellprüfständen wird das jeweilige noch unverbaute Drehgestell auf ein Messgleis gehoben oder aufgefahren, welches auf einem Gleisträger angeordnet und über eine entsprechende, im Allgemeinen mit einem Fundament versehene Unterkonstruktion gegenüber dem Untergrund abgestützt ist. An den beiden Schienen des Messgleises ist jeweils mindestens eine Messkammer mit mindestens einem Messwertaufnehmer angeordnet. Die Messung der Radaufstandskräfte erfolgt dabei in der Regel mittels in den Messkammern angeordneter Scherstäbe.

Bei Unterflurvarianten gattungsgemäßer Drehgestellprüfstände sind der das Messgleis tragende Gleisträger und die zugehörige Unterkonstruktion in einer Grube angeordnet. Zur Einleitung der für die Messungen erforderlichen Kräfte ist oberhalb der Grube ein Belastungsjoch angeordnet, welches von beidseits der Grube befestigten Stützmasten getragen wird und mit diesen ein die Grube überspannendes Portal bildet. Vermittels entsprechender an diesem Portal angeordneter Einrichtungen werden die der Simulation unterschiedlicher Belastungszustände dienenden Kräfte von oben in das jeweils zu prüfende Drehgestell eingetragen. Zur Positionierung für den Prüfvorgang wird das jeweilige Drehgestell auf ein vor und/oder hinter dem Messgleis angeordnetes Auffahrgleis gehoben und von diesem aus in die eigentliche Messposition unterhalb des Portals auf das Messgleis gezogen oder geschoben. Da das Portal mit dem Belastungsjoch das Messgleis überspannt, ist es nicht möglich, das Drehgestell unmittelbar auf das Messgleis zu heben.

Darüber hinaus sind Überflurvarianten von Drehgestellprüfständen mit grundsätzlich gleichem Aufbau bekannt. Diese haben den Vorteil, dass sich die Drehgestelle bei der Prüfung in Arbeitshöhe der die Prüfung ausführenden Personen befinden. Allerdings ist es hierbei erforderlich, den das Messgleis tragenden Gleisträger und dessen Unterkonstruktion mittels vergleichsweise aufwendiger Fundamentkonstruktionen statisch zu sichern. Auch bei einer solchen Variante ist mindestens ein Auffahrabschnitt vor beziehungsweise hinter dem Messgleis erforderlich. Dieser ist in Form eines Einlauf- oder Scherenhubtisches ausgebildet, über welche das Drehgestell auf das Messgleis gezogen beziehungsweise geschoben wird.

Den Betreibern kleinerer Fahrzeugflotten ist es aus Kostengründen im Allgemeinen nicht möglich, im Bereich ihrer Werkstätten und Instandhaltungseinrichtungen einen entsprechenden Drehgestellprüfstand zu installieren. Sie müssen daher die erforderlichen Prüfungen an den Drehgestellen auf Anlagen externer Anbieter vornehmen lassen. Dies ist jedoch häufiger mit Wartezeiten verbunden und bedingt, dass die Unternehmen, um trotzdem stets eine entsprechende Beförderungskapazität anbieten zu können, eine redundante Die der Simulation unterschiedlicher Belastungszustände dienenden Kräfte werden hierbei ebenfalls mittels oberhalb eines zu prüfenden Drehgestells an einem Portal angeordneter Einrichtungen erzeugt und wirken jeweils von oben als Druckkraft auf das Drehgestell. Im Hinblick auf das Erfordernis entsprechender Auffahrbereiche und den für das Portal benötigten Bauraum weisen Drehgestellprüfstände der vorgenannten Art eine beträchtliche Größe auf. Sie sind daher ortsfest ausgebildet.

Ein Drehgestellprüfstand der zuvor erläuterten Art wird beispielsweise durch die EP 1 918 689 A2 beschrieben. Die genannte Schrift widmet sich dabei der genauen Positionierung eines zu prüfenden Drehgestells auf dem Prüfstand, um sicherzustellen, dass die Prüfkraft symmetrisch in das Drehgestell eingeleitet wird. Die Prüfkraft selbst wird mittels einer zentral oberhalb des entsprechend positionierten Drehgestells angeordneten Belastungseinrichtung in das Drehgestell eingetragen.

Durch die GB 2 266 123 A wird ein Prüfstand für das Monitoring von Radachsen von Gleisfahrzeugen unter dynamischer Belastung beschrieben. Die entsprechenden, der Simulation einer dynamischen Belastung dienenden Kräfte werden an den Achsenden mittels dazu oberhalb der zu prüfenden beziehungsweise hinsichtlich ihres dynamischen Verhaltens zu beobachtenden Radachse angeordneter, vorzugsweise pneumatischer Zylinder in die Radachse eingetragen.

Zahl von Wagen beziehungsweise Waggons mit zugehörigen Drehgestellen vorhalten müssen. Auch dies führt jedoch zu erhöhten Kosten. Daher wäre es wünschenswert, flexiblere Lösungen zu schaffen, welche den Untenehmen die Prüfung bei ihnen im Einsatz befindlicher Drehgestelle im Bedarfsfall kurzfristig ermöglichen, ohne dass sie hierfür selbst kostenintensive Technik vorhalten müssen. Aus logistischen Gründen wäre es dabei außerdem vorteilhaft, wenn die Prüfung vor Ort bei dem jeweiligen Unternehmen erfolgen könnte.

Aufgrund der schon angesprochenen Baugröße und der für eine statisch zuverlässige Konstruktion erforderlichen Aufwendungen ist es jedoch im Grunde nicht möglich, Drehgestellprüfstände der zuvor beschriebenen Art zu verlegen, um etwa den Unternehmen bei Bedarf eine Prüfung ihrer Technik vor Ort zu ermöglichen. Dies gilt insbesondere im Hinblick auf das Erfordernis einer örtlichen Umverlegung des Portals mit dem Belastungsjoch auch für die Überflurvarianten solcher Prüfstände. Zudem handelt es sich bei derartigen Prüfständen um aus messtechnischer Sicht hochsensible Anordnungen, deren Einheiten im Falle einer Umverlegung jeweils aufwendig neu für die Messung kalibriert werden müssten.

Ein von der Anmelderin entwickelter Prüfstand, welcher entsprechend dem zuvor beschriebenen Stand der Technik ausgebildet ist, wird durch die Fig. 3 beispielhaft veranschaulicht. Ferner ist aus der US 4,793,047 eine vergleichbare Einrichtung zum Adjustieren der Gewichtsverteilung bei einem asymmetrischen Dreiachsen-Fahrgestell einer Lokomotive bekannt. Zur Bestimmung der gegebenen Gewichtsverteilung wird das Fahrgestell über vier Lastpunkte gleichzeitig mit einer von oben wirkenden Druckkraft belastet. Die Lastpunkte liegen jeweils zwischen zwei Achsen beidseits des Fahrgestells, wobei die jeweils auf einer Seite des Fahrgestells vorgesehenen Mittel für den Lasteintrag in die Lastpunkte der betreffenden Seite über eine Traverse miteinander verbunden sind. Insoweit besitzt auch diese Einrichtung einen portalartigen Aufbau der eine beträchtliche Baugröße bedingt und nicht für den Betrieb an wechselnden Einsatzorten konzipiert ist.

Aufgabe der Erfindung ist es, eine gegenüber dem Stand der Technik flexiblere Lösung zur Prüfung von Drehgestellen von Schienenfahrzeugen bereitzustellen. Hierzu sind ein Verfahren anzugeben und ein die Durchführung dieses Verfahrens ermöglichender Drehgestellprüfstand bereitzustellen, welcher vorzugsweise darüber hinaus als Montagestand zum Ausbau und Einbau sowie zur Einstellung von Baugruppen von Drehgestellen geeignet ist. Der entsprechende Prüf- und Montagestand soll außerdem gegenüber den aus dem Stand der Technik bekannten Lösungen für Drehgestellprüfstände weniger Bauraum benötigen.

Die Aufgabe wird durch ein Verfahren mit den Merkmalen des Hauptanspruchs gelöst. Ein die Aufgabe lösender Drehgestellprüfstand beziehungsweise Prüf- und Montagestand ist durch den ersten vorrichtungsbezogenen Anspruch charakterisiert. Vorteilhafte Aus- beziehungsweise Weiterbildungen der Erfindung sind durch die jeweiligen Unteransprüche gegeben.

Wie aus dem Stand der Technik bekannt, werden entsprechend dem die Aufgabe lösenden Prüfverfahren für Drehgestelle, die an einem Drehgestell bei seinem bestimmungsgemäßen Einsatz auftretenden Belastungen auf einem dafür ausgebildeten Prüfstand an dem noch unverbauten Drehgestell simuliert. Hierzu werden Kräfte in das Drehgestell eingeleitet, wie sie bei dessen betriebsgemäßem Einsatz durch die Gewichtskraft eines Wagenkastens und durch andere betriebsbedingte Belastungszustände verursacht werden. Die Wirkung dieser Belastungszustände auf das Drehgestell und/oder auf ein von dem Drehgestell befahrenes Gleis wird durch mittels Messwertaufnehmern des Prüfstandes gewonnene und rechentechnisch verarbeitete Messwerte beschrieben. Abweichend vom Stand der Technik werden jedoch die der Simulation von Belastungszuständen dienenden Kräfte nicht als Druckkräfte von oben in das zu prüfende Drehgestell eingeleitet. Erfindungsgemäß wird vielmehr die jeweilige, zur Simulation eines Betriebszustands einzuleitende Kraft als eine direkt an dem betreffenden Drehgestell oder an einem unmittelbar auf diesem Drehgestell aufliegenden Element des Prüfstands angreifende Zugkraft appliziert.

Die beschriebene Vorgehensweise, das heißt die gegenüber dem Stand der Technik veränderte Art der Krafteinleitung in ein zu prüfendes Drehgestell ermöglicht es, wie bei der Darstellung des erfindungsgemäßen Prüf- und Montagestandes noch näher auszuführen sein wird, eine zur Prüfung von Drehgestellen ausgebildete Vorrichtung sehr kompakt und platzsparend auszubilden. Dem liegt die grundsätzliche Überlegung zugrunde, dass es möglich ist, die beim betriebsgemäßen Gebrauch des Drehgestells an ihm auftretenden Druckkräfte zum Zweck der Prüfung durch betragsgleiche, aus der Gegenrichtung wirkende Zugkräfte zu simulieren.

Entsprechend möglicher Ausbildungsformen der Erfindung werden mittels jeweils in einem Messgeräteträger des entsprechend ausgebildeten Prüfstandes angeordneter Messwertaufnehmer die bei den jeweils simulierten Betriebsbedingungen über das Drehgestell auf ein Gleis wirkenden Radaufstandskräfte oder Achslasten bestimmt. Ferner kann das Prüfverfahren die Bestimmung der jeweiligen Drehgestellhöhe bei unterschiedlichen Belastungszuständen umfassen. Dabei ist die Drehgestellhöhe, wie aus dem Stand der Technik bekannt, als Abstand zwischen einer Markierung an dem Drehgestell und der Oberkante des Schienenkopfs eines Gleises definiert. Dieser Abstand beziehungsweise die Drehgestellhöhe kann beispielsweise mittels an einem entsprechend ausgebildeten Prüfstand angeordneter optischer Sensoren bestimmt werden. Ferner ist es möglich, unter Einwirkung von Belastungskräften auf das Drehgestell, also gemäß dem grundsätzlichen erfinderischen Gedanken bei Wirken entsprechender Zugkräfte, die jeweils bezüglich einer Achse bestehende Parallelität der Radscheiben und/oder die Parallelität der Achsen eines Drehgestells zu bestimmen. Auch hierfür gelangen vorzugsweise optische Sensoren zum Einsatz.

Wie bereits eingangs dargelegt, kann die der Simulation eines Belastungszustands dienende Kraft direkt oder indirekt über ein zusätzliches Element an dem Drehgestell angreifen. Gemäß einer möglichen Verfahrensweise, bei welcher die Kraft direkt auf das Drehgestell wirkt, greift dabei die jeweilige Zugkraft aus der Richtung des Gleises an der Oberseite der Drehpfanne eines Drehgestells an. Hierzu wird ein die Zugkraft vermittelndes Element durch die Drehpfanne hindurch geführt und an deren Oberseite befestigt.

Eine andere Verfahrensvariante bezieht sich insbesondere auf die Prüfung von Drehgestellen, welche mit Luftfedern oder Gleitstücken ausgestattet sind. Hierbei greift die jeweilige Zugkraft aus Richtung des Gleises mittig an der Unterseite eines Jochs an, welches zwischen zwei Achsen des Drehgestells mittig auf dessen Luftfedern beziehungsweise Gleitstücken aufliegt. Vermittels des Jochs können dabei sowohl ein gleichmäßiger Krafteintrag an beiden Außenseiten des Drehgestells als auch eine asymmetrische Belastung simuliert werden.

Ein die Aufgabe lösender Prüf- und Montagestand für Drehgestelle von Gleisfahrzeugen ist mit auf einer Tragkonstruktion unterhalb eines zu prüfenden Drehgestells angeordneten Messgeräteträgern, mit Mitteln zur Erzeugung und Weiterleitung von zur Simulation betriebsbedingter Belastungszustände in das noch unverbaute, mit seinen Rädern an Aufstandspunkten der Messträger positionierte Drehgestell einzuleitenden Kräften, mit Messwertaufnehmern zur Erfassung durch die simulierten Belastungszustände an dem Drehgestell und/oder an den Aufstandspunkten seiner Räder hervorgerufener Wirkungen sowie mit mindestens einer Auswerteeinheit und mit Bedienelementen ausgestattet.

Erfindungsgemäß ist der entsprechende Prüf- und Montagestand so gestaltet, dass an ihm zur Simulation der Belastungszustände für das Drehgestell mindestens ein Motor und Mittel zur Umformung eines von dem Motor hervorgerufenen Drehmoments in eine aus der Richtung der Tragkonstruktion auf das Drehgestell wirkende Zugkraft angeordnet sind. Vorzugsweise ist dabei der Motor zur Erzeugung der die Belastungszustände simulierenden Kräfte unterhalb der Ebene der Aufstandspunkte der Räder des Drehgestells angeordnet. Ohne eine signifikante Erhöhung des Aufwands zur Umformung des Motordrehmoments in die jeweils erforderliche Zugkraft und unter dem Gesichtspunkt einer platzsparenden Bauweise ist aber grundsätzlich auch eine Anordnung des Motors in etwa auf der Höhe der Aufstandspunkte des Drehgestells denkbar. In jedem Falle besteht der Grundgedanke der Erfindung darin, die bei herkömmlichen, bekannten Prüfständen oberhalb des Messgleises, das heißt oberhalb des Drehgestells und seiner Radaufstandspunkte in beziehungsweise an einem Portal angeordneten Mittel zur Erzeugung einer der Simulation dienenden Druckkraft nach unten zu verlagern, sie dabei vorzugsweise unterhalb des Niveaus der Radaufstandspunkte anzuordnen und mit ihrer Hilfe die jeweils erforderliche Kraft als Zugkraft zu applizieren. Hierdurch ergibt sich eine kompakte Bauweise des Prüf- und Montagestandes, welche die Anordnung eines zusätzlichen, am Boden beidseits des Prüfstandes zu befestigenden Portals entbehrlich macht.

Durch die beschriebene kompakte Bauweise lassen sich äußerst platzsparende Prüfstände beziehungsweise Montagestände realisieren. Die erfindungsgemäße Vorrichtung ermöglicht es darüber hinaus, einen derartigen Prüf- und Montagestand mobil auszubilden. Entsprechend einer vorteilhaften Ausbildungsform der Erfindung sind daher, gegebenenfalls abgesehen von der mindestens einen Auswerteeinheit und den Bedienelementen, alle vorgenannten Elemente des Prüf- und Montagestandes, einschließlich des Motors und der dessen Drehmoment in die an dem zu prüfenden Drehgestell angreifende Zugkraft umformenden Mittel, an einem Rahmengestell angeordnet. Ein derartiges Rahmengestell und die daran zur Realisierung der Prüffunktionen angeordneten Elemente bilden eine kompakte Einheit aus, welche ohne das Erfordernis einer Demontage von Elementen des Prüfstandes verladen und zu einem Einsatzort verbracht werden kann. Aufgrund der integralen Ausbildung dieser Einheit ist es dabei am Einsatzort nicht erforderlich, umfangreichere Justier- oder Kalibrierarbeiten, wie insbesondere eine Einstellung der Messwertaufnehmer, vorzunehmen. Das System ist vielmehr grundsätzlich sofort einsatzfähig. Die zur weitergehenden Auswertung der von den Messwertaufnehmern aufgenommenen Messwerte erforderlichen Einheiten und etwaige Steuermodule zur Bedienung können ebenfalls unmittelbar an der kompakten Einheit montiert sein oder am Einsatzort einfach über entsprechende, an der Einheit vorgesehene Schnittstellen, vorzugsweise Standardschnittstellen oder über ein Bussystem mit den übrigen elektrischen beziehungsweise elektronischen Komponenten der Einheit gekoppelt werden.

Insbesondere bei der Ausbildung als mobile Einheit ist der Prüf- und Montagestand so gestaltet, dass die Ebene der Aufstandspunkte der Räder des zu prüfenden Drehgestells bei auf dem Boden aufstehendem Rahmengestell in der Arbeitshöhe einer stehenden Bedienperson angeordnet ist. Hierdurch ist es möglich, alle Bedienvorgänge zur Prüfung eines Drehgestells in einer für die Bedienperson komfortablen Arbeitshaltung durchzuführen. In ihrer Eigenschaft als Montagestand ermöglicht es die Vorrichtung dabei außerdem, Baugruppen des Drehgestells, welche nur unter Last aus- beziehungsweise eingebaut oder eingestellt werden können, komfortabel zu demontieren beziehungsweise zu montieren oder entsprechend zu justieren.

Zur Umformung des Drehmoments des die Kräfte zur Simulation der Belastungsbedingungen erzeugenden Motors in die jeweilige Zugkraft, das heißt zur Umformung der Drehbewegung des Motors in eine translatorische Bewegung, sind unterschiedliche Möglichkeiten gegeben. Entsprechend einer Ausbildungsform der Erfindung wird die Drehbewegung der Motorwelle durch ein Umlenkgetriebe in eine translatorische Bewegung umgeformt, die über eine mit dem Umlenkgetriebe und dem auf der Tragkonstruktion des Prüf- und Montagestandes stehenden Drehgestell koppelbare Zugstange oder Zugspindel auf das Drehgestell übertragen wird. Ferner kommt zur Umformung der Drehbewegung in eine translatorische Bewegung der Einsatz mindestens eines Zugseils und von Umlenkrollen in Betracht. Eine weitere Möglichkeit ist durch den Einsatz mindestens eines durch den Motor betätigen Hydraulikzylinders gegeben.

Der erfindungsgemäße Prüf- und Montagestand ist vorzugsweise derart weitergebildet, dass der Abstand der Ausstandspunkte beziehungsweise der Messgeräteträger mittels motorisch oder manuell zu betätigender Spindeln entsprechend der jeweiligen Spurweite und dem Achsabstand eines zu prüfenden Drehgestells verstellbar ist. Die an dem Prüf- und Montagestand angeordneten Messwertaufnehmer umfassen vorzugsweise mindestens jeweils unterhalb der Räder des zu prüfenden Drehgestells positionierbare Messkammern, in denen Scherstäbe zur Erfassung der über die Räder beim bestimmungsgemäßen Einsatz des Drehgestells auf ein Gleis wirkenden Radaufstandskräfte angeordnet sind. Die bereits mehrfach angesprochenen Messgeräteträger mit den vorzugsweise darin zur Erfassung von Radaufstandskräften angeordneten Messkammern können, wie aus dem Stand der Technik bekannt, in oder an den Schienen eines Messgleises angeordnet sein

Bei einer besonders vorteilhaften Ausbildungsform der Erfindung sind die Messgeräteträger jedoch als verschiebliche und entsprechend dem Achsabstand eines zu prüfenden Drehgestells positionierbare Prismenaufnahmen ausgebildet. Vorzugsweise sind diese Prismenaufnahmen als Rollprismen ausgebildet, so dass es ermöglicht ist, die Räder des Drehgestells ohne Ortsveränderung des Drehgestells anzutreiben. Die Räder werden dabei mittels des auch zur Erzeugung der die Belastungszustände simulierenden Kräfte verwendeten Motors über ein entsprechendes Getriebe oder mittels eines oder mehrerer weiterer an dem Prüf- und Montagestand angeordneter Motoren angetrieben.

Einzelne Aspekte der Erfindung sollen nachfolgend nochmals anhand von Zeichnungen erläutert werden, wobei in einer der Zeichnungen zum Vergleich ein Prüfstand nach dem Stand der Technik dargestellt ist. Die Zeichnungen zeigen im Einzelnen:
- Fig. 1:: ein Ausführungsbeispiel des erfindungsgemäßen Prüf- und Montagestandes,
- Fig. 2:: einen Messgeräteträger des Prüf- und Montagestandes nach Fig. 1,
- Fig. 3:: einen Prüfstand für Drehgestelle nach dem Stand der Technik.

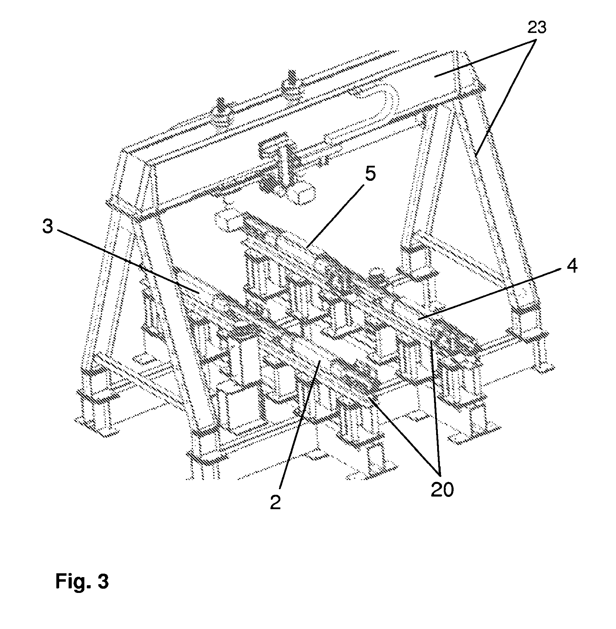

In der Fig. 3 ist ein Prüfstand für Drehgestelle von Gleisfahrzeugen dargestellt, wie er aus dem eingangs der Beschreibung erläuterten Stand der Technik bekannt ist. Die Darstellung betrifft eine Überflurvariante eines solchen Prüfstandes, welche in der Zeichnung ohne den erforderlichen Einrollbeziehungsweise Scherenhubtisch dargestellt ist. Die wesentlichsten Elemente dieses Prüfstandes sind ein Messgleis 20 mit daran angeordneten Messgeräteträgern 2, 3, 4, 5 und ein Portal 23 mit einem sich oberhalb des Messgleises quer erstreckenden Belastungsjoch. Das Messgleis 20 und das Portal 23 mit dem Belastungsjoch stützen sich auf einer gemeinsamen Unterkonstruktion ab. An beiden Schienen des Messgleises 20 sind je zwei Messgeräteträger 2, 3, 4, 5 angeordnet, in welchen jeweils eine Messkammer mit Scherstabelementen zur Ermittlung von Radaufstandskräften ausgebildet ist. Zur Simulation von im Betrieb auftretenden Belastungszuständen werden in ein in dieser Zeichnung nicht dargestelltes Drehgestell, welches auf dem Messgleis 20 positioniert wird, durch dazu an dem Belastungsjoch des Portals 23 angeordnete Mittel Kräfte eingeleitet. Die mittels entsprechender Aggregate an dem Belastungsjoch erzeugten Kräfte werden von oben als Druckkräfte appliziert. Die aufgrund dieser simulierten Belastungen an dem Drehgestell und/oder dem darunter befindlichen Messgleis auftretenden Wirkungen werden mittels der in den Messgeräteträgern 2, 3, 4, 5 angeordneten Messwertaufnehmer erfasst. Aus der Darstellung ist ersichtlich, dass ein zu prüfendes Drehgestell wegen des oberhalb des Messgleises 20 angeordneten Portals 23 nicht in den Prüfstand unmittelbar eingehoben werden kann. Das Drehgestell muss vielmehr über einen, wie bereits ausgeführt, nicht dargestellten Einroll- beziehungsweise Scherenhubtisch auf das Messgleis 20 gezogen werden. Hierdurch sowie durch das entsprechend breite und hohe Portal 23 weist der Prüfstand eine erhebliche Baugröße auf, welche für seinen Standort einen beträchtlichen Platzbedarf bedingt. Sofern man die dargestellte Überflurvariante als mobile, lediglich durch einen entsprechenden Eiroll- beziehungsweise Scherenhubtisch zu ergänzende Einheit ansehen wollte, wird unmittelbar klar, dass die Verladung und der Transport einer solchen Einheit durch die Bauform mit dem Portal 23 erheblich erschwert ist beziehungsweise eine teilweise Demontage des Prüfstands erfordert. Der letztgenannte Umstand bringt es mit sich, dass der Prüfstand am Einsatzort zunächst wieder montiert und dann kalibriert werden muss.

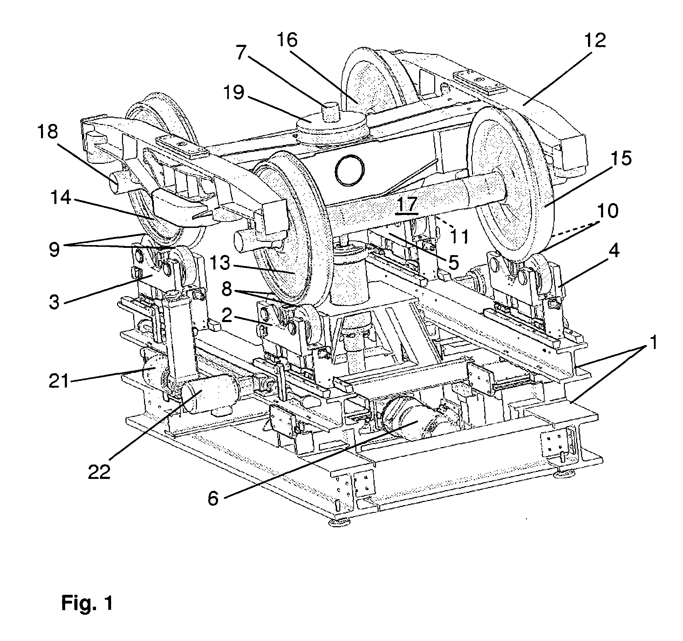

Die Fig. 1 zeigt demgegenüber eine mögliche Ausbildungsform des erfindungsgemäßen Prüf- und Montagestandes. Dem erfinderischen Grundgedanken folgend, sind hier die Mittel zur Erzeugung der die Belastungszustände simulierenden Kräfte und die Elemente zu deren Übertragung auf das zu prüfende Drehgestell nach unten verlegt. Dazu ist unterhalb der Ebene der Radaufstandspunkte 8, 9, 10, 11 des Drehgestells 12 ein die entsprechenden Kräfte erzeugender Motor 6 angeordnet. Dessen an einer in der Darstellung nicht erkennbaren Motorwelle abnehmbares Drehmoment wird über ein ebenfalls nicht erkennbares Umlenkgetriebe auf eine Zugstange 7 übertragen. Die Zugstange 7 ist durch die Drehpfanne 19 des zu prüfenden, auf dem Prüf- und Montagestand positionierten Drehgestells 12 geführt und an dieser befestigt. Die mittels des Umlenkgetriebes in eine translatorische Bewegung umgeformte Drehbewegung des Motors 6 erzeugt eine Kraft, die über die Zugstange 7 aufgrund ihrer Befestigung an dem Drehgestell 12 als Zugkraft an der Drehpfanne 19 angreift. Die Räder 13, 14, 15, 16 des Drehgestells 12 sind auf Rollenprismen positioniert, durch welche Messgeräteträger 2, 3, 4, 5 ausgebildet sind, von denen jeweils eine Messkammer mit mindestens einem darin angeordneten Scherstab aufgenommen wird. Mittels der Messwertaufnehmer in Form der Scherstäbe können in an sich bekannter Weise die Radaufstandskräfte ermittelt werden, welche bei unterschiedlichen, durch entsprechende Zugkräfte simulierten Belastungszuständen auftreten. Die Messgeräteträger 2, 3, 4, 5 beziehungsweise Rollenprismen sind mittels weiterer an dem Stand angeordneter Motoren 21, 22 bezüglich des Achsabstandes und der Spurweite des jeweils zu prüfenden Drehgestells 12 verschiebbar beziehungsweise positionierbar. Alle wesentlichen Elemente des Prüfstands, nämlich die in den in Form von Rollprismen ausgebildeten Messgeräteträgern 2, 3, 4, 5 angeordneten Messwertaufnehmer, die zur Positionierung der Messgeräteträger 2, 3, 4, 5 dienenden Mittel sowie der Motor 6 zur Erzeugung und die Zugstange 7 zur Übertragung der die Belastungszustände simulierenden Kräfte sind, wie aus der Figur ersichtlich, an einem kompakten Rahmengestell 1 angeordnet. Dabei ist das entsprechende Rahmengestell 1 so dimensioniert, dass sich die Ebene der Radaufstandspunkte 8, 9, 10, 11 in der Arbeitshöhe einer stehenden Bedienperson befindet. Dadurch können neben den Prüfarbeiten auch sehr komfortabel Montage- beziehungsweise Einstellarbeiten an dem Drehgestell 12 ausgeführt werden.

Die gesamte Anordnung ist gegebenenfalls noch um hier nicht gezeigte elektrische beziehungsweise elektronische Einheiten zur Bedienung und zur rechentechnischen Weiterverarbeitung der mittels der Messwertaufnehmer erfassten Messgrößen vervollständigt. Entsprechende Einheiten können aber gegebenenfalls auch in der Form eines abgesetzten Bedienpults über Standardschnittstellen mit den elektrischen beziehungsweise elektronischen Elementen, insbesondere dem entsprechend den jeweils zu simulierenden Belastungszuständen anzusteuernden Motor 6 und den Messwertaufnehmern des Messstandes verbunden sein. Aus der Abbildung wird erkennbar, dass der Prüf- und Montagestand in dieser kompakten Ausbildungsform als mobile Einheit dienen kann, die vergleichsweise einfach zu verladen und für eine Prüfung von Drehgestellen 12 zu einem Betreiber entsprechender Gleisfahrzeuge gebracht sowie vor Ort ohne größeren Aufwand praktisch unmittelbar in Betrieb genommen werden kann.

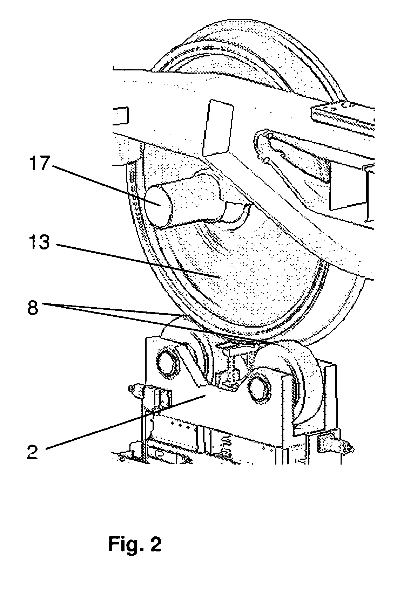

Die Fig. 2 zeigt nochmals eine Einzelheit des Prüf- und Montagestandes nach der Fig. 1. Dargestellt ist hier nochmals ein Messgeräteträger 2 in Form eines Rollenprismas und ein darauf positioniertes Rad 13 eines Drehgestells 12. Mittels der beiden Rollen des Rollenprismas kann das entsprechende Rad 13 beziehungsweise eine Achse 17, 18 des Drehgestells 12 angetrieben werden, so dass beispielsweise der Rundlauf der Radreifen gemessen beziehungsweise überprüft werden kann.

### Liste der Bezugszeichen

| | |
|---|---|
| 1 | Tragkonstruktion, zum Beispiel Rahmengestell |
| 2, 3, 4, 5 | Messgeräteträger |
| 6 | Motor |
| 7 | Zugstange oder -spindel |
| 8, 9, 10, 11 | Aufstandspunkte |
| 12 | Drehgestell |
| 13, 14, 15, 16 | Rad |
| 17, 18 | Achse |
| 19 | Drehpfanne |
| 20 | Messgleis |
| 21, 22 | Motor |
| 23 | Portal |

## Patentansprüche

1. Prüfverfahren für Drehgestelle (12) von Gleisfahrzeugen, nach welchem die an einem Drehgestell (12) bei seinem bestimmungsgemäßen Einsatz auftretenden, durch die Gewichtskraft eines Wagenkastens und betriebsbedingte Belastungszustände verursachten Kräfte auf einem dafür ausgebildeten Prüfstand an dem noch unverbauten Drehgestell (12) simuliert und ihre Wirkung auf das Drehgestell (12) und/oder auf ein von dem Drehgestell befahrenes Gleis durch mittels Messwertaufnehmern des Prüfstandes gewonnene und rechentechnisch verarbeitete Messwerte beschrieben wird, **dadurch gekennzeichnet, dass** die jeweilige zur Simulation eines Betriebszustands in das zu prüfende Drehgestell (12) einzuleitende Kraft als eine direkt an dem betreffenden Drehgestell (12) oder an einem unmittelbar auf diesem Drehgestell (12) aufliegenden Element des Prüfstandes angreifende Zugkraft appliziert wird.

2. Prüfverfahren nach Anspruch 1, **dadurch gekennzeichnet, dass** mittels jeweils in einem Messgeräteträger (2, 3, 4, 5) des Prüfstandes angeordneter Messwertaufnehmer die bei den jeweils simulierten Betriebsbedingungen über dass Drehgestell (12) und jedes seiner Räder (13, 14, 15, 16) bei seinem bestimmungsgemäßen Einsatz auf ein Gleis wirkenden Radaufstandskräfte bestimmt werden.

3. Prüfverfahren nach Anspruch 1, **dadurch gekennzeichnet, dass** mittels jeweils in einem Messgeräteträger (2, 3, 4, 5) des Prüfstandes angeordneter Messwertaufnehmer die bei den jeweils simulierten Betriebsbedingungen über dass Drehgestell (12) und jede seiner Achsen (17, 18) bei seinem bestimmungsgemäßen Einsatz auf ein Gleis wirkenden Achslasten bestimmt werden.

4. Prüfverfahren nach Anspruch 1, **dadurch gekennzeichnet, dass** mittels an dem Messstand angeordneter Messwertaufnehmer für einzelne simulierte Betriebszustände die als Abstand zwischen einer Markierung an dem Drehgestell (12) und einem Gleis definierte Höhe des Drehgestells (12) bestimmt wird.

5. Prüfverfahren nach Anspruch 1, **dadurch gekennzeichnet, dass** mittels an dem Messstand angeordneter Messwertaufnehmer für einzelne simulierte Betriebszustände die jeweils bezüglich der Räder (13, 14, 15, 16) einer Achse (17, 18) des Drehgestells (12) bestehende Parallelität der Radscheiben und/oder die Parallelität der Achsen (17, 18) des Drehgestells (12) bestimmt wird.

6. Prüfverfahren nach einem der Ansprüche 1 bis 4, **dadurch gekennzeichnet, dass** die jeweilige Zugkraft aus Richtung des Gleises an der Oberseite der Drehpfanne (19) des Drehgestells (12) angreift, wobei ein die Zugkraft vermittelndes Element (7) durch die Drehpfanne (19) hindurchgeführt wird.

7. Prüfverfahren nach einem der Ansprüche 1 bis 4, **dadurch gekennzeichnet, dass** bei einem mit Luftfedern oder Gleitstücken ausgestatteten Drehgestell (12) die jeweilige Zugkraft aus Richtung des Gleises mittig an der Unterseite eines Jochs angreift, welches zwischen zwei Achsen (17, 18) des Drehgestells (12) mittig auf den Luftfedern oder den Gleitstücken aufliegt.

8. Prüf- und Montagestand für Drehgestelle (12) von Gleisfahrzeugen mit auf einer Tragkonstruktion (1) unterhalb eines zu prüfenden Drehgestells (12) angeordneten Messgeräteträgern (2, 3, 4, 5), Mitteln (6, 7) zur Erzeugung und Weiterleitung von zur Simulation betriebsbedingter Belastungszustände in das noch unverbaute, mit seinen Rädern (13, 14, 15, 16) an Aufstandspunkten (8, 9, 10, 11) auf den Messgeräteträgern (2, 3, 4, 5) positionierte Drehgestell (12) einzuleitenden Kräften, mit Messwertaufnehmern zur Erfassung durch die simulierten Belastungszustände an dem Drehgestell (12) und/oder an den Aufstandspunkten (8, 9, 10, 11) seiner Räder (13, 14, 15, 16) hervorgerufener Wirkungen sowie mit mindestens einer Auswerteeinheit zur Verarbeitung der von der Messwertaufnehmern erfassten Messwerte und mit Bedienelementen, **dadurch gekennzeichnet, dass** zur Simulation der Belastungszustände für das Drehgestell (12) an dem Prüf- und Montagestand mindestens ein Motor (6) und Mittel zur Umformung eines von dem Motor (6) hervorgerufenen Drehmoments in eine aus der Richtung der Tragkonstruktion (1) auf das Drehgestell (12) wirkende Zugkraft angeordnet sind.

9. Prüf- und Montagestand nach Anspruch 8, **dadurch gekennzeichnet, dass** der Motor (6) zur Erzeugung der die Belastungszustände simulierenden Kräfte unterhalb der Ebene der Aufstandspunkte (8, 9, 10, 11) der Räder (13, 14, 15, 16) des Drehgestells (12) angeordnet ist.

10. Prüf- und Montagestand nach Anspruch 8 oder 9, **dadurch gekennzeichnet, dass** dieser als mobile und kompakte Einheit ausgebildet ist, wobei abgesehen von der mindestens einen Auswerteeinheit und den Bedienelementen zumindest alle anderen vorgenannten Elemente des Prüf- und Montagestandes, einschließlich des Motors (6) und der dessen Drehmoment in die an dem zu prüfenden Drehgestell (12) angreifende Zugkraft umformenden Mittel an der in Form eines Rahmengestells ausgebildeten Tragkonstruktion (1) angeordnet sind.

11. Prüf- und Montagestand nach Anspruch 10, **dadurch gekennzeichnet, dass** die Ebene der Aufstandspunkte (8, 9, 10, 11) der Räder (13, 14, 15, 16) des Drehgestells (12) bei auf dem Boden stehenden Rahmengestell (1) in der Arbeitshöhe einer stehenden Bedienperson angeordnet ist.

12. Prüf- und Montagestand nach einem der Ansprüche 8 bis 11, **dadurch gekennzeichnet, dass** die Drehbewegung des Motors (6) durch ein Umlenkgetriebe in eine translatorische Bewegung umgeformt wird, die über eine mit dem Umlenkgetriebe und dem auf der Tragkonstruktion (1) stehenden Drehgestell (12) koppelbare Zugstange (7) auf das Drehgestell (12) übertragen wird und die an dem Drehgestell (12) zur Simulation eines Belastungszustands wirkende Zugkraft hervorruft.

13. Prüf- und Montagestand nach einem der Ansprüche 8 bis 11, **dadurch gekennzeichnet, dass** die Drehbewegung des Motors (6) mittels mindestens eines Zugseils und Umlenkrollen in eine an dem zu prüfenden Drehgestell (12) angreifende translatorische Bewegung umgeformt wird.

14. Prüf- und Montagestand nach einem der Ansprüche 8 bis 13, **dadurch gekennzeichnet, dass** an diesem zur Umformung des Drehmoments des Motors (6) in die an dem Drehgestell (12) angreifende Zugkraft mindestens ein Hydraulikzylinder angeordnet ist.

15. Prüf- und Montagestand nach einem der Ansprüche 8 bis 14, **dadurch gekennzeichnet, dass** der Abstand der Aufstandspunkte (8, 9, 10, 11) beziehungsweise der Messgeräteträger (2, 3, 4, 5) entsprechend dem Achsabstand und der jeweiligen Spurweite eines zu prüfenden Drehgestells (12) verstellbar ist.

16. Prüf- und Montagestand nach einem der Ansprüche 8 bis 15, **dadurch gekennzeichnet, dass** die Messwertaufnehmer mindestens mittels der Messgeräteträger (2, 3, 4, 5) jeweils unterhalb eines Rades (13, 14, 15, 16) des zu prüfenden Drehgestells (12) positionierbare Messkammern mit darin angeordneten Scherstäben zur Erfassung der über die Räder (13, 14, 15, 16) beim bestimmungsgemäßen Einsatz des Drehgestells (12) auf ein Gleis wirkenden Radaufstandkräfte umfassen.

17. Prüf- und Montagestand nach einem der Ansprüche 8 bis 16, **dadurch gekennzeichnet, dass** die Messgeräteträger (2, 3, 4, 5) in oder an den Schienen eines Messgleises (20) angeordnet sind.

18. Prüf- und Montagestand nach einem der Ansprüche 8 bis 16, **dadurch gekennzeichnet, dass** die Messgeräteträger (2, 3, 4, 5) als verschiebliche und entsprechend dem Achsabstand des Drehgestells (12) positionierbare Prismenaufnahmen ausgebildet sind.

19. Prüf- und Montagestand nach Anspruch 18, **dadurch gekennzeichnet, dass** die Prismenaufnahmen als Rollenprismen ausgebildet sind, so dass es ermöglicht ist, die Räder (13, 14, 15, 16) eines Drehgestells (12) ohne eine durch das Drehgestell (12) ausgeführte Ortsveränderung anzutreiben, wobei die Räder (13, 14, 15, 16) mittels des Motors (6) zur Erzeugung der die Belastungszustände simulierenden Kräfte oder mittels eines oder mehrerer weiterer an dem Prüf- und Montagestand angeordneter Motoren (21, 22) angetrieben werden.

## Claims

1. A test method for bogies (12) of rail vehicles according to which the forces occurring on a bogie (12) when used as intended and caused by the gravitational force of a car body and operational load states are simulated on a test stand designed for this purpose, using an as yet uninstalled bogie (12) and its effect on the bogie (12) and/or on a track on which the bogie travels is described by means of measured values obtained by measured value pickups of the test stand and processed by computer, **characterised in that** the respective force introduced into the bogie (12) to be tested for simulation of an operating state is applied as a tensile force acting directly on the respective bogie (12) or on an element of the test stand resting directly on said bogie (12).

2. The test method according to Claim 1, **characterised in that** by means of measured value pickups arranged in a measurement device carrier (2, 3, 4, 5) of the test stand, the wheel loads acting on a track under the simulated operating conditions via the bogie (12) and each of its wheels (13, 14, 15, 16) when used as intended are determined.

3. The test method according to Claim 1, **characterised in that** the axle loads acting on a track via the bogie (12) under the respective simulated operating conditions, and each of its axles (17, 18) when used as intended are determined by means of measured value pickups arranged in a measurement device carrier (2, 3, 4, 5) of the test stand.

4. The test method according to Claim 1, **characterised in that** the height of the bogie (12) defined as the distance between a mark on the bogie (12) and a track is determined by means of measured value pickups arranged on the test stand for individual simulated operating states.

5. The test method according to Claim 1, **characterised in that** the parallelism of the wheel disks and/or the parallelism of the axles (17, 18) of the bogie (12) with respect to the wheels (13, 14, 15, 16) of an axle (17, 18) of the bogie (12) is/are determined by means of measured value pickups arranged on the test stand or individual simulated operating states.

6. The test method according to any one of Claims 1 to 4, **characterised in that** the respective tensile force acts on the top side of the bogie pivot (19) of the bogie (12) from the direction of the track, such that an element (7) which transfers the tensile force is passed through the bogie pivot (19).

7. The test method according to any one of Claims 1 to 4, **characterised in that** in the case of a bogie (12) equipped with pneumatic springs or sliding blocks, the respective tensile force acts from the direction of the track centrally on the lower side of a yoke which rests centrally on the pneumatic springs or the sliding blocks between two axles (17, 18) of the bogie (12).

8. A test stand and assembly stand for bogies (12) of rail vehicles having measurement device carriers (2, 3, 4, 5) arranged on a supporting structure (1) beneath a bogie (12) to be tested, also having means (6, 7) for generating and transmitting forces introduced into the bogie (12) which is positioned on the measurement device carriers (2, 3, 4, 5) but has not yet been installed, its wheel (13, 14, 15, 16) being situated at contact points (8, 9, 10, 11) on the measurement device carriers, also being equipped with measured value pickups for detecting effects induced by the simulated load states on the bogie (12) and/or at the contact points (8, 9, 10, 11) of its wheels (13, 14, 15, 16) as well as with at least one evaluation unit for processing the measured values detected by the measured value pickups and with operating elements, **characterised in that** at least one motor (6) and means for converting a torque induced by the motor (6) into a tensile force acting on the bogie (12) from the direction of the supporting structure (1) are arranged on the test stand and assembly stand for simulation of the load states for the bogie (12).

9. The test stand and assembly stand according to Claim 8, **characterised in that** the motor (6) for generating the forces simulating the load states is arranged beneath the plane of the contact points (8, 9, 10, 11) of the wheels (13, 14, 15, 16) of the bogie (12).

10. The test stand and assembly stand according to Claim 8 or 9, **characterised in that** it is designed as a mobile and compact unit, such that apart from the at least one evaluation unit and the operating elements, at least all other elements of the test stand and assembly stand mentioned above, including the motor (6) and the means converting its torque into the tensile force acting on the bogie (12) to be tested are arranged on the supporting structure (1) which is designed in the form of a frame.

11. The test stand and assembly stand according to Claim 10, **characterised in that** the
plane of the contact points (8, 9, 10, 11) of the wheels (13, 14, 15, 16) of the bogie (12) is arranged at the working height of an operator standing up in the case of the frame (1) standing on the ground.

12. The test stand and assembly stand according to any one of Claims 8 to 11, **characterised in that** the rotational movement of the motor (6) is converted into a translatory movement by a deflection gear, this translatory movement being transferred to the bogie (12) via a tension rod (7) which can be coupled to the deflection gear and the bogie (12) standing on the supporting structure (1), and the translatory movement induces the tensile force acting on the bogie (12) for simulation of a load state.

13. The test stand and assembly stand according to any one of Claims 8 to 11, **characterised in that** the rotational movement of the motor (6) is converted by at least one tension cable and pulleys into a translatory movement acting on the bogie (12) to be tested.

14. The test stand and assembly stand according to any one of Claims 8 to 13, **characterised in that** at least hydraulic cylinder is arranged on it for converting the torque of the motor (6) into the tensile force acting on the bogie (12).

15. The test stand and assembly stand according to any one of Claims 8 to 14, **characterised in that** the distance between the contact points (8, 9, 10, 11) and/or the measurement device carriers (2, 3, 4, 5) is adjustable according to the axle base and the respective rail gauge of a bogie (12) to be tested.

16. The test stand and assembly stand according to any one of Claims 8 to 15, **characterised in that** the measured value pickups comprise at least measurement chambers which can be positioned beneath the wheel (13, 14, 15, 16) of the bogie (12) to be tested by means of the measurement device carriers (2, 3, 4, 5), having shear rods arranged in them for detecting the wheel loads acting on a track via the wheels (13, 14, 15, 16) in use of the bogie (12) as intended.

17. The test stand and assembly stand according to any one of Claims 8 to 16, **characterised in that** the measurement device carriers (2, 3, 4, 5) are arranged in or on the rails of a test track (20).

18. The test stand and assembly stand according to any one of Claims 8 to 16, **characterised in that** the measurement device carriers (2, 3, 4, 5) are designed as displaceable prism pickups which can be positioned in accordance with the axle base of the bogie (12).

19. The test stand and assembly stand according to Claim 18, **characterised in that** the prism receptacles are designed as rolling prisms so that it is possible to drive the wheels (13, 14, 15, 16) of a bogie (12) without a change in position executed by the bogie (12), such that the wheels (13, 14, 15, 16) are driven by means of the motor (6) to create the forces simulating the load states or by means of one or more additional motors (21, 22) arranged on the test stand and assembly stand.

## Revendications

1. Procédé de contrôle de bogies (12) de véhicules ferroviaires, selon lequel on simule sur un banc d'essai, sur le bogie (12) pas encore monté, les forces appliquées à un bogie (12) lors de son utilisation normale et causées par le poids d'une caisse de voiture et par des états de charge liés à son fonctionnement, et on décrit leur effet sur le bogie (12) et/ou sur une voie parcourue par le bogie par des valeurs de mesure obtenues au moyen d'enregistreurs de valeurs de mesure du banc d'essai et traitées par des techniques de calcul, **caractérisé en ce que** l'on applique la force respective à introduire dans le bogie (12) à contrôler pour la simulation d'un état de fonctionnement sous la forme d'une force de traction agissant directement sur le bogie concerné (12) ou sur un élément du banc d'essai s'appliquant directement sur ce bogie (12).

2. Procédé de contrôle selon la revendication 1, **caractérisé en ce que** l'on détermine, dans les conditions de fonctionnement respectivement simulées, au moyen d'enregistreurs de valeurs de mesure disposés respectivement dans un support d'appareil de mesure (2, 3, 4, 5) du banc d'essai, les forces d'appui des roues agissant sur une voie par l'intermédiaire du bogie (12) et de chacune de ses roues (13, 14, 15, 16) lors de son utilisation normale.

3. Procédé de contrôle selon la revendication 1, **caractérisé en ce que** l'on détermine, dans les conditions de fonctionnement respectivement simulées, au moyen d'enregistreurs de valeurs de mesure disposés respectivement dans un support d'appareil de mesure (2, 3, 4, 5) du banc d'essai, les charges par essieu agissant sur une voie par l'intermédiaire du bogie (12) et de chacun de ses essieux (17, 18) lors de son utilisation normale.

4. Procédé de contrôle selon la revendication 1, **caractérisé en ce que** l'on détermine, au moyen d'enregistreurs de valeurs de mesure disposés sur le banc de mesure, pour quelques états de fonctionnement simulés, la hauteur du bogie (12) définie comme la distance entre un marquage sur le bogie (12) et une voie.

5. Procédé de contrôle selon la revendication 1, **caractérisé en ce que** l'on détermine, au moyen d'enregistreurs de valeurs de mesure disposés sur le banc de mesure, pour quelques états de fonctionnement simulés, le parallélisme des disques de roue existant par rapport aux roues (13, 14, 15, 16) d'un essieu (17, 18) du bogie (12) et/ou le parallélisme des essieux (17, 18) du bogie (12).

6. Procédé de contrôle selon l'une quelconque des revendications 1 à 4, **caractérisé en ce que** la force de traction respective dans la direction de la voie agit sur le côté supérieur du cercle de rotation (19) du bogie (12), dans lequel on introduit à travers le cercle de rotation (19) un élément (7) transmettant la force de traction.

7. Procédé de contrôle selon l'une quelconque des revendications 1 à 4, **caractérisé en ce que**, dans un bogie (12) équipé d'amortisseurs pneumatiques ou de lisoirs, la force de traction respective dans la direction de la voie agit au milieu sur le côté inférieur d'une entretoise, qui repose entre deux essieux (17, 18) du bogie (12) au milieu sur les amortisseurs pneumatiques ou les lisoirs.

8. Banc d'essai et de montage pour bogies (12) de véhicules ferroviaires avec des supports d'appareils de mesure (2, 3, 4, 5), des moyens (6, 7) pour la production et la propagation de forces à introduire dans le bogie (12) encore non monté et positionné avec ses roues (13, 14, 15, 16) en des points d'appui (8, 9, 10, 11) sur les supports d'appareils de mesure (2, 3, 4, 5), disposés sur une structure de support (1) en dessous d'un bogie (12) à contrôler, pour la simulation d'états de charge liés au fonctionnement, avec des enregistreurs de valeurs de mesure pour la détection d'effets suscités par les états de charge simulés sur le bogie (12) et/ou sur les points d'appui (8, 9, 10, 11) de ses roues (13, 14, 15, 16) ainsi qu'avec au moins une unité d'évaluation pour le traitement des valeurs de mesure détectées par les enregistreurs de valeurs de mesure, et avec des éléments de commande, **caractérisé en ce que**, pour la simulation des états de charge pour le bogie (12), au moins un moteur (6) et des moyens pour la transformation d'un couple de rotation produit par le moteur (6) en une force de traction agissant sur le bogie (12) dans la direction de la structure de support (1) sont disposés sur le banc d'essai et de montage.

9. Banc d'essai et de montage selon la revendication 8, **caractérisé en ce que** le moteur (6) pour la production des forces simulant les états de charge est disposé en dessous du plan des points d'appui (8, 9, 10, 11) des roues (13, 14, 15, 16) du bogie (12).

10. Banc d'essai et de montage selon la revendication 8 ou 9, **caractérisé en ce que** celui-ci est réalisé sous la forme d'une unité mobile et compacte, dans lequel, abstraction faite de ladite au moins une unité d'évaluation et des éléments de commande, au moins tous les autres éléments précités du banc d'essai et de montage, y compris le moteur (6) et les moyens transformant son couple de rotation en une force de traction agissant sur le bogie (12) à contrôler, sont disposés sur la structure de support (1) réalisée sous la forme d'un bâti.

11. Banc d'essai et de montage selon la revendication 10, **caractérisé en ce que** le plan des points d'appui (8, 9, 10, 11) des roues (13, 14, 15, 16) du bogie (12) est disposé à la hauteur de travail d'un opérateur debout lorsque le bâti (1) est installé sur le sol.

12. Banc d'essai et de montage selon l'une quelconque des revendications 8 à 11, **caractérisé en ce que** le mouvement de rotation du moteur (6) est transformé par un mécanisme de conversion en un mouvement de translation, qui est transmis au bogie (12) par une barre de traction (7) pouvant être couplée au mécanisme de conversion et au bogie (12) installé sur la structure de support (1), et qui produit la force de traction agissant sur le bogie (12) pour la simulation d'un état de charge.

13. Banc d'essai et de montage selon l'une quelconque des revendications 8 à 11, **caractérisé en ce que** le mouvement de rotation du moteur (6) est transformé en un mouvement de translation agissant sur le bogie (12) à contrôler au moyen d'au moins un câble de traction et de rouleaux de déviation.

14. Banc d'essai et de montage selon l'une quelconque des revendications 8 à 13, **caractérisé en ce qu'**au moins un cylindre hydraulique est disposé sur celui-ci pour la transformation du couple de rotation du moteur (6) en la force de traction agissant sur le bogie (12).

15. Banc d'essai et de montage selon l'une quelconque des revendications 8 à 14, **caractérisé en ce que** la distance des points d'appui (8, 9, 10, 11) ou des supports d'appareils de mesure (2, 3, 4, 5) est réglable en fonction de l'empattement et de l'écartement respectif des rails d'un bogie (12) à contrôler.

16. Banc d'essai et de montage selon l'une quelconque des revendications 8 à 15, **caractérisé en ce que** les enregistreurs de valeurs de mesure comprennent des chambres de mesure pouvant être positionnées au moins au moyen des supports d'appareils de mesure (2, 3, 4, 5) respectivement en dessous d'une roue (13, 14, 15, 16) du bogie (12) à contrôler, avec des barres de cisaillement disposées dans celles-ci pour la détection des forces d'appui des roues agissant sur une voie par l'intermédiaire des roues (13, 14, 15, 16) lors de l'utilisation normale du bogie (12).

17. Banc d'essai et de montage selon l'une quelconque des revendications 8 à 16, **caractérisé en ce que** les supports d'appareils de mesure (2, 3, 4, 5) sont disposés dans ou sur les rails d'une voie de mesure (20).

18. Banc d'essai et de montage selon l'une quelconque des revendications 8 à 16, **caractérisé en ce que** les supports d'appareils de mesure (2, 3, 4, 5) sont réalisés sous la forme de supports prismatiques mobiles et pouvant être positionnés selon l'empattement du bogie (12).

19. Banc d'essai et de montage selon la revendication 18, **caractérisé en ce que** les supports prismatiques sont réalisés sous la forme de prismes à rouleaux, de telle manière qu'il soit possible d'entraîner les roues (13, 14, 15, 16) d'un bogie (12) sans que le bogie (12) change de position, dans lequel les roues (13, 14, 15, 16) sont entraînées au moyen du moteur (6) pour la production des forces simulant les états de charge ou au moyen d'un ou de plusieurs moteurs (21, 22) disposés sur le banc d'essai et de montage.
